Europäisches Patentamt

European Patent Office

Office européen des brevets

(19)

(11) Veröffentlichungsnummer: **0 128 117**
A1

## (12) EUROPÄISCHE PATENTANMELDUNG

(21) Anmeldenummer: 84810228.1

(22) Anmeldetag: 10.05.84

(51) Int. Cl.³: **A 61 C 19/04**
A 61 C 11/00

(30) Priorität: 10.05.83 CH 2549/83

(43) Veröffentlichungstag der Anmeldung:
12.12.84 Patentblatt 84/50

(84) Benannte Vertragsstaaten:
IT

(71) Anmelder: Weber, Roland
Grand-Chêne 5
CH-1003 Lausanne(CH)

(72) Erfinder: Weber, Roland
Grand-Chêne 5
CH-1003 Lausanne(CH)

(74) Vertreter: Gasser, François W.
Hirschengraben 10 Postfach 1555
CH-3001 Bern(CH)

(54) Verbesserte Vorrichtung für die Aufzeichnung der Kondylenbewegung eines Patienten.

(57) Die Vorrichtung unterscheidet sich von allen bekannten Artikulatoren insbesondere dadurch, dass die Abstützungen (11, 12) für den klappbaren Oberteil (2) auf einer gemeinsamen Achse befestigbar sind. Diese Achse ist lediglich auf einer Mittelstütze montiert und kann definiert festgelegt werden. Das Pantograf-Teil (3) kann jederzeit aus der Vorrichtung zu Kontrollszwecken in den Mund des Patienten und zurück vesetzt werden, ohne Einstellungsänderungen zu bedingen. Im Artikulator ist jede Vor-, Rück- und Seitenbissposition der Gebissmodelle (6, 7) feststellbar.

EP 0 128 117 A1

./...

Fig.1

- 1-

BEZEICHNUNG GEÄNDERT
Siehe Titelseite

VERBESSERTE VORRICHTUNG FUER DIE AUFZEICHNUNG DER KONDYLEN-
BEWEGUNGEN EINES PATIENTEN.UND DEREN NACHTRAEGLICHER
EXAKTER SIMULATION UNTER EINBEZIEHUNG VON GEBISSMODELLEN
ZWECKS BESTIMMUNG DER NOTWENDIGEN KORREKTUREN DER
KAUFLAECHEN FUER DIE ERLANGUNG DER IDEALEN OKKLUSION

Die vorliegende Erfindung betrifft eine verbesserte Vorrichtung für die Aufzeichnung der Kondylenbewegungen eines
Patienten und deren nachträglicher exakter Simulation unter
Einbeziehung von Gebissmodellen zwecks Bestimmung der notwendigen Korrekturen der Kauflächen für die Erlangung der
idealen Okklusion.

In der Zahnheilkunde ist, z.B. aus dem 1961 im Verlag Mosbey & Co. erschienenen Buch "Modern Gnathological Concepts"
von Victor O. Lucia, bereits eine Mehrzahl von Geräten und
Vorrichtungen bekannt, die der Aufzeichnung und Nachbildung
der habituellen Okklusion eines Patienten dienen, und zum
Zwecke haben, Funktions- oder Okklusionsstörungen des Patienten durch Korrektur der Kauflächenprofile der Zähne an
Ober- und Unterkiefer zu korrigieren. Der Praktiker weiss
aber, dass all diese Geräte und Vorrichtungen entweder sehr
kompliziert zu bedienen sind und/oder Ergebnisse bringen,
deren praktische Auswertung sehr aufwendig ist. Zudem
lassen sie in der Regel keine nachträgliche Korrektur der
Zuordnung der Kauflächen von Ober- und Unterkieferzähnen im
Gerät selbst zu, um z.B. Montage- oder Gipsexpansions-Fehler auszugleichen. Ferner werden oft für die Registrierung

der Kondylenbewegungen am Patienten und deren Nachbildung separate Geräte verwendet, was die Reproduzierbarkeit der Messungen und Bewegungen stark in Frage stellt, wenn nicht verunmöglicht.

Diese Nachteile hat der von Weber entwickelte Artikulator gemäss der CH-PS 437 629 (US-PS 3,552,020) sowie dessen erste Weiterentwicklung gemäss der CH-PS 604 675 (US-PS 4,185,387) in weitem Masse beseitigt. Es handelt sich bei diesem Gerät erstmals um ein solches, das die räumliche Lagebeziehung des Unterkiefers zum Oberkiefer und die Bewegungen des Unterkiefers anhand einer geeigneten Grenzbewegungsaufzeichnung einzustellen gestattet, was anhand eines zugehörigen Pantografen in Verbindung mit einem justierbaren Kontrollsockel geschieht. Mit diesen bekannten Geräten von Weber lässt sich die ganze Problematik um das "Zentrische Registrat" erstmals in befriedigender Art und Weise lösen.

Aufgabe der vorliegenden Erfindung ist es, eine noch weiter verbesserte Vorrichtung zu schaffen, die einerseits gegenüber dem bekannten Gerät von Weber weitergehende Möglichkeiten bietet und die zudem eine vereinfachte Manipulation ermöglicht.

Erfindungsgemäss wird diese Aufgabe durch die verbesserte Vorrichtung gelöst, wie sie im Patentanspruch 1 definiert ist.

Im Folgenden ist eine vorteilhafte Ausführungsvariante der erfindungsgemässen Vorrichtung sowie deren Verwendung anhand der Zeichnung beschrieben. In letzterer zeigt

Fig. 1 die Vorrichtung in der Zusammenstellung, wie sie für die Uebertragung der am Patienten aufgezeichneten Unterkieferbewegungen anhand von Gipsmodellen der Ober- und Unterkiefer des Patienten verwendet wird,

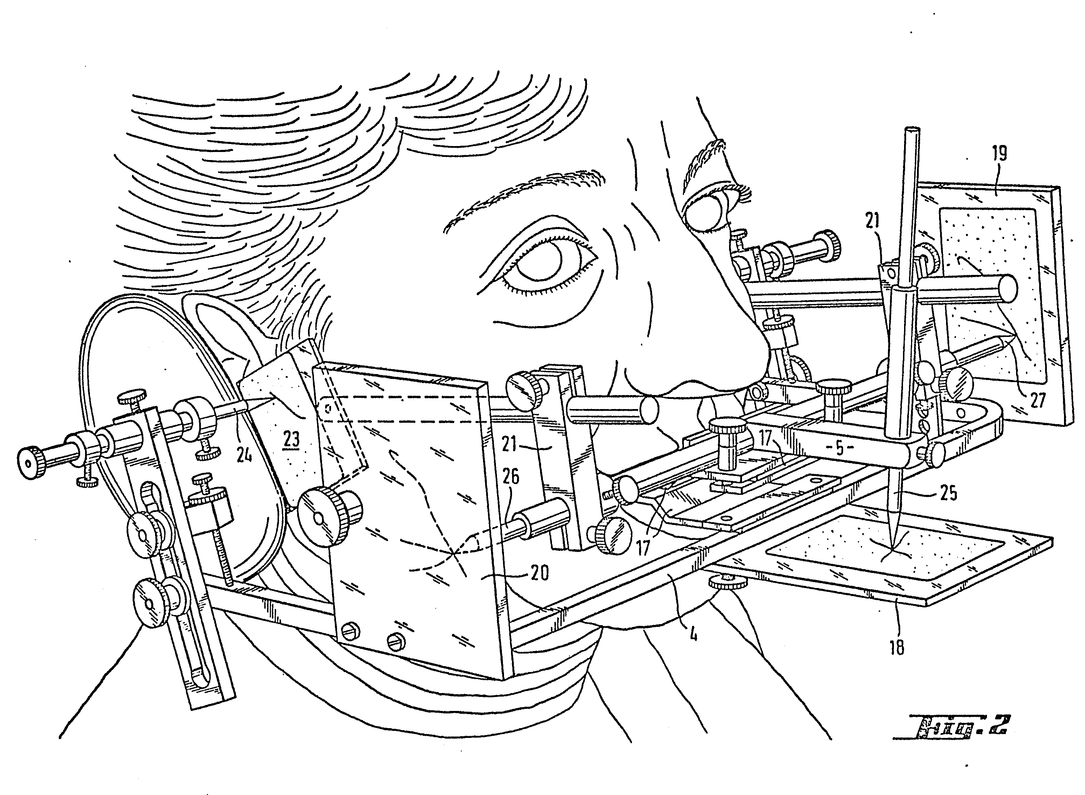

Fig. 2 den Pantograf-Teil der Vorrichtung im Einsatz beim Registrieren der habituellen Okklusion an einer Patientin, und

Fig. 3 den Artikulator-Teil der Vorrichtung von hinten oben, mit Blick auf die Montage der Blocks der Leitelemente, mittels welchen das Artikulator-Oberteil auf dessen Unterteil gelagert ist.

In der Zeichnung sowie der Beschreibung werden all die Teile, die in den vorerwähnten Patentschriften oder in anderen Publikationen, auf die jeweils gesondert hingewiesen wird, bereits beschrieben wurden, nicht detailliert behandelt, da sie, genau wie ihre Verwendungen, dem Fachmann geläufig sein dürften. Der Einfachheit halber und um unnötige Wiederholungen zu vermeiden sowie die Besonderheiten der erfindungsgemässen Vorrichtung gegenüber den bekannten Geräten von Weber einfacher darzulegen, wird hiernach immer wieder der Vergleich zwischen diesen Artkulatoren gezogen.

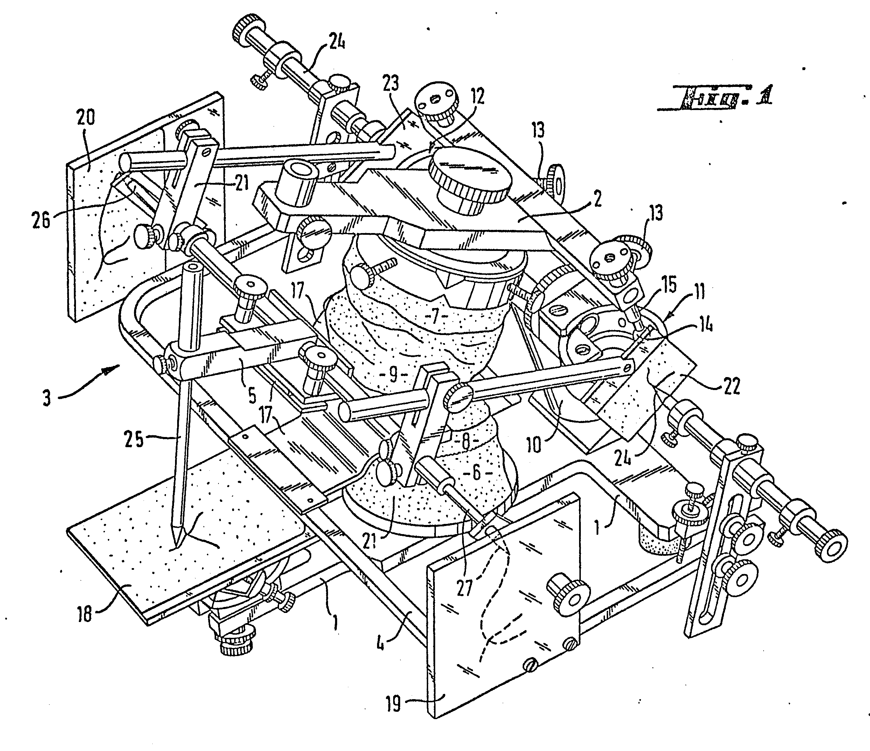

In Fig. 1 erkennt man die einzelnen Teile der erfindungsgemässen Vorrichtung, bei denen es sich im wesentlichen um ein Artikulator-Unterteil 1, ein schwenkbar darauf montierbares Artikulator-Oberteil 2 sowie ein Pantograf-Teil 3, bestehend aus einem Unterkiefer-Registrierbogen 4 und einem Oberkiefer-Registrierbogen 5, handelt. Dabei trägt jedes der Teile 1 und 2 ein Gebiss-Modell, und zwar das Artikulator-Unterteil 1 das Unterkieferzähne-Modell 6 und das Artikulator-Oberteil 2 das Oberkieferzähne-Modell 7. Ferner trägt der Unterkiefer-Registrierbogen 4, den Unterkieferzähne-Abruck 8, wogegen der Oberkiefer-Registrierbogen 5 den Oberkieferzähne-Abdruck 9 trägt. Vorteilhafterweise sind dabei die beiden Modelle 6 und 7 in der in der
CH-PS 604 675 beschriebenen Art mit den zugehörigen
Artikulator-Teilen verbunden, wogegen die Abdrücke 8 und 9
mittels intraoralen Fixierungslöffeln gemäss dem int.
Modell DM/001 188 auf den entsprechenden Registrierbögen
befestigt sind.

Gegenüber den bekannten Ausführungen der Artikulatoren von
Weber unterscheiden sich die einzelnen Teile der neuen
Vorrichtung im wesentlichen durch folgende Besonderheiten:

Das Artikulator-Unterteil 1:

- weist lediglich noch eine einzige Mittelstütze 10 (Fig.
  3) auf, so dass die Sicht auf die im Artikulator
  montierten Modelle auch diagnoal frei ist und alle Zähne
  frei zugänglich sind

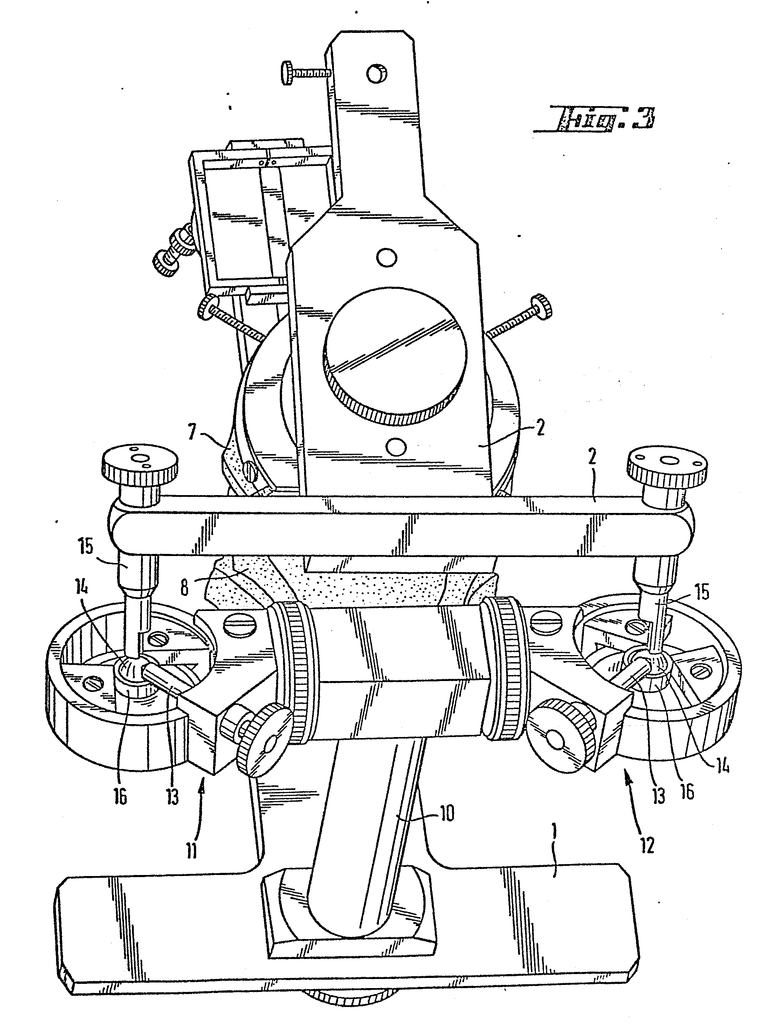

- die beiden Blocks 11 und 12 (Fig. 3) der Leitelemente
  sind auf einer gemeinsamen zentralen Achse, der Interkondylarachse und nicht mehr an zwei separaten seitlichen
  Pfosten montiert. Sie sind dadurch in ihrer relativen
  Lage zueinander fixiert und um die Interkondylarachse
  drehbar

- jeder Block 11/12 ist auf der Interkondylarachse lateral
  verschiebbar und weist je einen schraubbaren Zylinderstift 13 auf, mittels welchem die Kondylen-Kugeln 14
  (Fig. 3) fixiert werden können

- in seinem zentralen vorderen Bereich weist er eine an
  sich bekannte, verstellbare Abstützung für einen vorderen
  Stützstift auf.

Das Artikulator-Oberteil 2:

- kann in seinem vorderen Bereich einen vorderen Stützstift
  verschieb- und feststellbar aufnehmen

- die Arme 15 mit den an ihren unteren Enden sitzenden
  Kondylen-Kugeln 14 sind mit Hilfsringen 16 ausgerüstet,
  die sich über die Kugeln 14 schieben lassen und deren
  wirksame Durchmesserebene vergrössern können. Damit
  lassen sich Retrusionsbewegungen zur Diagnose okklusionsbedingter Transversal- und Retralverlagerungen simulieren, ohne dass die Montageposition der Modelle verloren
  geht. Die Arme sind wiederum fest, d.h. seitlich nicht
  versetzbar.

Der Unterkiefer-Registrierbogen 4 ist im wesentlichen
unverändert, wobei aber:

- die auf die Interkondylar-Achse des Unterkiefers einzustellenden Kugelköpfe, die auf U-förmigen gebogenen
  Stangen montiert waren, durch in die Interkondylar-Achse
  legbare Spitzen 24 ersetzt sind

- der Unterkieferzähne-Abdruck 8 mittels einem der vorbeschriebenen neuen Fixierungslöffel 17, mit dem Unterkiefer-Registrierbogen verbunden ist. Dieser Löffel ist
  seinerseits mit einem positionierbaren Mc Grane-Stift
  ausgerüstet

- die vordere Registrierplatte 18 genau so wie die beiden
  seitlichen Registrierplatten 19 und 20 aus Plexiglas besteht und abnehmbar ist. Alle drei Platten 18 bis 20
  können reproduzierbar positioniert werden. Die seitlichen Registrierplatten 19 und 20 sind nun so bemessen
  und versetzt angeordnet, dass auch die Oeffnungsbewegungen dreidimensional vollständig erfasst werden können.

Der Oberkiefer-Registrierbogen 5 unterscheidet sich vom
bekannten dadurch:

- dass er den Oberkieferzähne-Abdruck 9 auf einem abnehm-
  und positionierbaren Fixierungslöffel 17 der vorerwähnten
  Art trägt, jedoch ohne Mc Grane-Stift

- mittels festklemmbaren Säulen 21 Hilfsregistrierplatten
  22 und 23 darauf montierbar sind, derart, dass sie mit
  den Spitzen 24 zusammenwirken können. Diese zusätzlichen
  sagittal-vertikalen Schreibplatten verbesssern die diagnostischen Möglichkeiten, indem sie z.B. pathologische
  Veränderungen der Kondylenbewegungen oder Fehlfunktionen
  der Knorpelscheibe direkt zur Darstellung bringen können.
  Und damit ist die Voraussetzung zur Ableitung der sogenannten "therapeutischen Zentrik" erfüllt

- dass der McGranische-Stützstift auf dem als Führungsplatte dienenden, so geformten Fixierungslöffel derart
  geführt wird, dass auf den Registrierebenen, die ihrerseits in einer so konstruierten Lage angeordnet sind,
  dass bei der Registrierung aller Artikulationsbewegungen
  drei eindeutige Kreuzungspunkte für die Zentrik entstehen.

Der Fachmann erkennt, dass mit all diesen Aenderungen die
bekannten Ausführungsformen der Artikulatoren von Weberdie, wie Stachniss in seiner Habilitationsschrift feststellt, die einzigen Geräte dieser Art sind, mittels welchen die räumliche Lagebeziehung des Unterkiefers zum Oberkiefer anhand einer Grenzbewegungsaufzeichnung einstellbar
ist, womit die Problematik des nur schwer, wenn überhaupt,
korrekt reproduzierbaren "Zentrischen Registrats" umgangen werden können - in einigen ganz wesentlichen Punkten verbessert worden sind. Insbesondere sind dadurch auch diesen bekannten Geräten noch anhaftende Nachteile überwunden und sogar neue Möglichkeiten geschaffen worden.

So bildet insbesondere die neue Ausgestaltung des Artikulator-Unterteils 1 gegenüber allen bekannten Artikulatoren ganz wesentliche Vorteile, ermöglicht es doch die einzige Mittelstütze 10, an alle Zähne des Modells frei heranzukommen. Zudem schafft die auf die Interkondylar-Achse bezogene feste Verbindung der Blocks 11 und 12 als Auflage für das Artikulator-Oberteil 2, verbunden mit den Zylinderstiften 13, mittels welchen die Kondylenkugeln 14 an den Leitelementen fest positionierbar sind, erstmals die Möglichkeit, das Artikulator-Oberteil 2 völlig vom Unterteil 12 abzuklappen, ohne seine relative Lage zu diesem zu verlieren.

Ferner ist es dank der Möglichkeit der progressiven Verschiebung eines jeden Blocks 11/12 auf der Interkondylar-Achse lateral mittels eines sogenannten "immediate sideshift" und der Verwendung der Hilfsringe 16 erstmals möglich, jede gwünschte therapeutische Vorbiss-, Rückbiss und Seitenposition der Modelle 6/7 ohne Verstellung des Artikulators zu realisieren.

Durch die Verwendung verschiedener Kurvenscheiben-Einsätze als Auflagen für die Kondylenkugeln 14 in den Blöcken 11 und 12 können diese Möglichkeiten zusätzlich erweitert werden.

Mittels je einer zentrisch rund um die Blocks verschiebbar angeordneten Seitbiss-Positionierungseinheit, im wesentlichen bestehend aus einer Klemmschraube, die auf die Kondylenkugeln (14) einwirken kann, kann auch jede Seitbissposition der Modelle 6, 7, respektive jede Medio- und Laterotrusionsbewegung im Artikulator festgehalten werden.

Die neue Vorrichung bietet ersmals die Möglichkeit der direkten und gleichzeitigen Kombination von Achsenbestimmung und Aufzeichnung der Kondylenbewegungen in einem Arbeitsgang. Sie ermöglicht es auch, mittels der Hilfsregistrierplatten 22 und den Spitzen 24, auf der Interkondylar-Achse die genauen Kiefergelenkbewegungen zu registrieren und ein krankhaftes Kiefergelenkknacken örtlich und zeitlich einwandfrei zu erfassen.

Dank der räumlich genau reproduzizerbaren Positionierung aller Registrierplatten (18, 19, 20 und 22, 23) und der Abdrücke 8, 9 des Pantograf-Teils 3 sowie der Gebissmodelle 6, 7 auf dem Artikulator, und der Tatsache, dass dieser jederzeit ohne Notwendigkeit der Verstellung irgend einer Einstellung sowohl an ihm selber als auch am Artikulator 1, 2 von diesem zur Kontrolle der Arbeit wieder in den Mund des Patienten einsetzbar ist, ist es möglich, jederzeit sowohl die habituelle als auch die ideale Okklusion eines Patienten zu rekonstruieren, selbst wenn sämtliche Teile demontiert worden waren. Eine Uebertragung der Messwerte und Ergebnisse von einem Gerät auf das andere ist dadurch erstmals problemlos möglich. Die erfindungsgemässe Vorrichtung ermöglicht es aber auch, die Messungen und Artikulationsbewegungen computergerecht zu erfassen und auszuwerten, indem sie durch beliebige bekannte Verfahren in elektrische Signale umgewandelt werden.

Indem die gemeinsame Achse der beiden Blocks 11, 12 auf Kugellagern gelagert wird und nach Belieben entweder in einer definierten Lage gegenüber der festen Mittelstütze 10 feststellbar, oder um ihre Längsachse, die Interkondylar-Achse, spielfrei drehbar gehalten wird, wobei die relative Positionierung der beiden Blocks 11, 12 zueinander immer fest und reproduzierbar bleibt, und das Artikulator-Oberteil 2 dank der schraubbaren Zylinderstifte 13 gegenüber den Blocks 11, 12 ebenfalls fest und reproduzierbar positionierbar ist, lässt sich der Artikulator 1, 2 sowohl als dreidimensional frei bewegliche Nachbildung eines Patientengebisses als auch als reines Scharniergelenk einsetzen, ohne dass dadurch irgendwelche Einstellungen und Messwerte verändert werden müssten. Dadurch wird die Arbeit des Einschleifens korrekter Kauflächenreliefs an den Modellen wesentlich erleichtert, denn durch einfaches Festziehen der Zylinderstifte 13 und das Freigeben der Achse der Interkondylar-Achse lässt sich das Artikulator-Oberteil 2 in eine völlig stabile Horizontallage, parallel zum Unterteil, zurückklappen, ohne sich auf den eingesetzten und festgestellten frontalen Stütz-Stift rückwärts abstützen zu müssen. Nun kann problemlos sowohl am Unterkiefer als auch am Oberkiefer-Modell gearbeitet werden, worauf durch simples Zurückklappen des Oberkieferteils 2 und Blockieren der besagten Achse sowie Lösen der Zylinderstifte die ursprüngliche räumliche Lagebeziehung zwischen Unter- und Oberkiefermodell wieder hergestellt ist.

Beim Gebrauch der neuen Vorrichtung, die zwangsläufig aus dem Artikulatorteil 1, 2 und dem Pantograf-Teil 3 besteht, wird der Fachmann feststellen, welchen enormen Stellenwert die vorerwähnten Verbesserungen aufweisen und wie stark sie ihm seine Arbeit erleichtern.

Die hiervor beschriebene verbesserte Vorrichtung für die Aufzeichnung der Kondylenbewegungen eines Patienten und deren nachträglicher exakter Simulation kann bei Bedarf in Einzelheiten verändert und/oder noch weiter verbessert werden. So können beispielsweise sämtiche Registrierplatten mit Positionnierungs- und Befestigungselementen für das reproduzierbare Positionnieren nicht selbst klebender Aufzeichnungspapiere versehen sein. Dies können unter anderem verstellbare Klemmschienen und Positionnierungsstifte sein. Ferner können die Registrierplatten mit transparenten Deckblättern bestückt werden, die verhindern, dass bei der Reproduktion der sich auf den Aufzeichnungpapieren befindlichen Kurven, ungewollt neue Markierungen ergeben.

Weiter können die Registrierspitzen in Miniaturkugeln enden oder durch selbstschreibende Stifte ersetzt werden, wenn nicht druckempfindliche Aufzeichnungspapiere verwendet werden sollen. Um das Loslösen der Gipssockel vom Artikulator zu erleichtern, kann derselbe mit einem hydrophoben Dauerbelag versehen werden.

Der vordere Stützstift kann in einem Führungsschlitz klemmend eingepasst, oder auf einem verschiebbaren Schlitten so montiert sein, dass er in jeder Vor- und Rückbisslage drehend und kippend arretierbar ist. Damit kann hinten der Immediateside-shift sehr schön nachvollzogen werden. Um die jeweilige Stellung des Stiftes bestimmbar zu gestalten, kann eine Einstellskala vorgesehen werden.

PATENTANSPRUECHE

1. Verbesserte Vorrichtung für die Aufzeichnung der Kondylenbewegungen eines Patienten und deren nachträglicher
   exakter Simulation unter Einbezug von Gebiss-Modellen
   zwecks Bestimmung der notwendigen Korrekturen der Kauflächen für die Erlangung der idealen Okklusion, welche
   Vorrichtung im wesentlichen aus einem aus Artikulator-
   Unterteil (1) und dazu in vorbestimmte räumliche Lagebeziehungen bringbarem Artikulator-Oberteil (2) bestehendem Artikulator (1) mit zwei Blocks (11, 12) mit Leitelementen auf dem Artikulator-Unterteil (1) für die Abstützung der Kondylenkugeln (14) des Artikulator Oberteils (2) und Mitteln für die definierte und reproduzierbare Montage von Unterkiefer- und Oberkieferzähnemodellen (6, 7) sowie einem aus Unterkiefer-Registrierbogen (4) und Oberkiefer-Registrierbogen (5) zusammengesetzten Pantograf-Teil (3) besteht, welch letzterer
   mit dem Artikulator (1) in vorbestimmter Art und Weise
   in Wirkverbindung bringbar ist und zumindest drei Registierplatten (18, 19, 20) mit zugeordneten Schreibstiften (25, 26 27) sowie Fixierungslöffeln (17) für die
   Verbindung eines Unterkieferzähne-Abdrucks (8) mit dem
   Unterkiefer-Registrierbogen (4) und eines Oberkieferzähne-Abdruckes (9) mit dem Oberkiefer-Registrierbogen (5),
   die ganze Vorrichtung dadurch gekennzeichnet, dass drei
   Registrierplatten in Zusammenwirkung mit dem Mc Grane'-
   schen Stützstift auf einer derart geformten Führungsfläche in einer solchen Distanz und Lage angeordnet werden,
   dass die Oeffnungsbewegungen der Artikulation vollständig dreidimensional erfasst werden, so dass drei eindeutige Kreuzungspunkte für die Okklusion entstehen, und
   dass der Artikulator-Unterteil (1) eine einzige Mittel
   stütze (10) aufweist, welche auf einer gemeinsamen Achse
   die zwei Blocks (11, 12) der Leitelemente trägt, wobei der Oberteil jederzeit stabil, parallel zum Unterteil, freihaltend zurückgeklappt werden kann

2. Vorrichtung nach Anspruch 1, dadurch gekennzeichnet, dass besagte Achse in zwei Kugellagern gelagert ist und mittels einer Feststellschraube in vorbestimmter Lage reproduzierbar blockierbar ist.

3. Vorrichtung die Führungselemente, Kurven und die Grundführungsplatte im Schnitt ein doppel-S-förmiges Profil aufweist.

4. Vorrichtung nach Anspruch 1 und 2 dadurch gekennzeichnet, dass der Artikulator-Oberteil zurückgeklappt ohne Stützstift stabil in der Horizontalposition bleibt.

5) Vorrichtung nach Anspruch 1 dadurch gekennzeichnet, dass die Kondylenkugeln je mittels einer Hülse als Führungshilfe gelagert sind, wobei die Kugeln mit einer zentral auf die Kugelstützen gerichteten Zentrierschraube deart festgehalten werden können, dass sie spielfrei zentral im Führungslager drehbar, ohne Spiel festgehalten werden können.

6) Vorrichtung nach Anspruch 1 dadurch gekennzeichnet, dass die Führungshilfen abnehmbar sind und eine programmierte Side-shift- und Retralbewegung erlauben, und somit jede habituelle Position zu imitieren gestatten, dies ohne die Modelle umbetten zu müssen.

7) Vorrichtung nach Anspruch 1 und 2 dadurch gekennzeichnet, dass der Artikulator einen frontalen Stützstift aufweist, welcher in einer sagittalen Führung in jeder wünschbaren Position drehbar arretierbar ist.

8) Vorrichtung nach Anspruch 1, 2, 6 und 7 dadurch gekennzeichnet, dass der Artikulator einen frontalen Stützstift aufweist, welcher in einer sagittalen Führung in jeder wünschbaren Position drehbar universell kippbar arretierbar ist.

9) Vorrichtung nach Anspruch 1 und 2 dadurch gekennzeichnet, dass die Führung als Schlitz ausgebildet ist, in welchem ein als Konus ausgebildetes Ende des Stützstiftes in jeder beliebigen Positon einrastet.

10) Vorrichtung nach Anspruch 1 und 2 dadurch gekennzeichnet, dass die Führung als Schlitz ausgebildet ist, in welchem ein als Konus ausgebildetes Ende des Stützstiftes in jeder beliebigen auf einer Skala ablesbaren Position einrastet.

Fig. 1

2/3

0128117

Fig.2

Fig.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,D | US-A-3 552 020  (WEBER)<br>* Insgesamt * | 1 | A 61 C  19/04<br>A 61 C  11/00 |
| | --- | | |
| Y | US-A-4 290 754  (EDWARDSON)<br>* Insgesamt * | 1 | |
| | ----- | | |

|  |
|---|
| RECHERCHIERTE SACHGEBIETE (Int. Cl. ³) |
| A 61 C |

Der vorliegende Recherchenbericht wurde für alle Patentansprüche erstellt.

| Recherchenort<br>DEN HAAG | Abschlußdatum der Recherche<br>27-07-1984 | Prüfer<br>VAN BOGAERT J.A.M.M. |
|---|---|---|